# EUROPÄISCHE PATENTSCHRIFT

(11) **EP 2 442 320 B1**
(45) Veröffentlichungstag und Bekanntmachung des Hinweises auf die Patenterteilung: **09.01.2013**
(21) Anmeldenummer: 10187702.5
(22) Anmeldetag: 15.10.2010
(51) Int. Cl.: H01F 27/04, B29C 31/00, H01B 17/26

(54) **Form zum Herstellen von hohlzylinderähnlichen Formteilen**
Mould for producing hollow cylinder moulded parts
Moule pour fabriquer des éléments de formage similaires à des cylindres creux

(43) Veröffentlichungstag der Anmeldung: 18.04.2012
(73) Patentinhaber: ABB Technology AG, 8050 Zürich (CH)
(72) Erfinder: Starke, Matthias, 06184 Kabelsketal (DE)
(74) Vertreter: Partner, Lothar

(56) Entgegenhaltungen:
- CH-A5- 695 968
- US-E- R E27 975

## Beschreibung

Die Erfindung betrifft eine Form zum Herstellen von hohlzylinderähnlichen Formteilen, mit einem äußeren Formabschnitt, durch welchen ein innerer Hohlraum eines um diesen herum zu fertigenden Formteils bestimmt ist, wobei der äußere Formabschnitt eine rotationssymmetrisch um eine erste Achse verlaufende erste Zylinderform und eine sich direkt axial an eines der beiden Zylinderformenden anschließende Halbkugelform gleichen Durchmessers aufweist, wobei eine zweite Zylinderform vorgesehen ist, welche sich in radialer Ausrichtung an die Halbkugelform anschließt

Es ist allgemein bekannt, dass Hochspannungstransformatoren oder auch Hochspannungsdrosseln, beispielsweise mit einer oberspannungsseitigen Nennspannung von 220kV oder 380kV und einer Nennleistung von >100MVA, zu Isolations- und Kühlzwecken zumeist in einem mit Öl gefüllten Transformatorkessel angeordnet sind. Eine wichtige Funktion bei einem derartigen Transformator hat die sogenannte Transformatordurchführung, durch welche das Hochspannungspotential von der Luftseite an die Wicklung im Transformatorkessel herangeführt wird. Bei reiner Luftisolation müsste der Abstand von auf Hochspannungspotential liegenden Bauteilen zum geerdeten Transformatorkessel - je nach Spannungsebene - bis zu 4m oder mehr betragen. Mittels ölgetränktem Papier oder Zellstoff, welcher einer sehr viel höheren Feldbeanspruchung als Luft standhält, kann der Abstand beträchtlich verkleinert werden. Führt man den Hochspannungsanschluss konzentrisch durch eine runde Öffnung in den Kessel, so reicht ein Abstand zwischen Innenleiter und Tank von beispielsweise 20 cm.

Es ist dem Fachmann weiterhin bekannt, dass im Bereich der Ausleitungen hierzu sogenannte Kalotten verwendet werden. Dies sind rotationssymmetrische Hohlkörper aus einem Metall, welche an einem axialen Ende einen halbkugelähnlichen Abschluss mit einem zumeist angewinkelten Rohransatz für einen Leiteranschluss und an ihrem anderen axialen Ende einen sich verjüngenden Durchmesser aufweisen. Zur verbesserten Isolation sind diese elektrisch leitfähigen Hohlkörper mit einem vorzugsweise doppelwandigen Barrieresystem aus einem Isolationsmaterial umgeben, welches ebenfalls innerhalb des ölgefüllten Transformatorkessels angeordnet ist.

Ein derartiges Barrieresystem, welches der Grundform des metallischen Hohlkörpers angepasst ist, wird zumeist aus Formteilmodulen aus einem Nassstoff hergestellt. Das bedeutet, dass um eine Form, deren äußere Kontur den inneren Hohlraum des herzustellenden Formteils nachbildet, eine Schicht aus nassem und daher formbaren Zellstoff oder einem sonstigen Isolationsmaterial angebracht wird, wobei anschließend die Form mit der sie umgebenden Isolationsmateriaischicht in einem Ofen getrocknet und ausgehärtet wird. Ein Beispiel für ein solches Barrieresystem ist in der Patentschrift CH 695 968 A5 beschrieben.

Als nachteilig erweist sich hierbei insbesondere, dass der angewinkelte Rohransatz zumeist in einem unterschiedlichen Winkel zur Rotationsachse der Kalotte anzufertigen ist. Der Winkel des Rohransatzes ist nämlich durch die Leiterführung im Inneren des Ölkessels bestimmt und richtet sich vorwiegend nach Isolationsaspekten. Daher ist es durchaus möglich, dass bei einem dreiphasigen Hochspannungstransformator bereits unterschiedliche Winkel der Rohransatzstücke der drei jeweiligen Kalotten benötigt werden. Zudem sind Hochspannungstransformatoren zumeist Unikate oder werden zumindest nur in Kleinstserien gefertigt, so dass sich Unterschiede zwischen den Transformatortypen ergeben. Daher benötigt ein Transformatorhersteller in nachteiliger Weise zumeist eine Vielzahl von verschiedenen Formen zur Herstellung der Isolationsbarrieren.

Um diese Formenvielfalt beim Herstellen der Isolationsbarrieren zu begrenzen, ist es daher üblich, zunächst ein Formteil ohne Rohransatz herzustellen, an der gewünschten Position im halbkugelförmigen Abschluss ein Loch des Durchmessers des Rohransatzes auszusparen und anschließend ein Rohransatzstück in dem dann individuell festgelegten Winkel anzubringen, beispielsweise durch Kleben. Dies erfordert zum einen zusätzliche Arbeitsschritte und reduziert zum anderen die Isolationsfähigkeit des als Barriere verwendeten Formteils bzw. Formteilmoduls an der Klebestelle.

Ausgehend von diesem Stand der Technik ist es Aufgabe der Erfindung, eine Form zur Herstellung von Formteilen anzugeben, welche die genannten Nachteile vermeidet.

Diese Aufgabe wird gelöst durch eine Form der eingangs genannten Art. Diese ist dadurch gekennzeichnet, dass die Halbkugelform eine Kugelkappe aufweist, dass die zweite Zylinderform zusammen mit der Kugelkappe um eine zweite zur ersten gewinkelt angeordnete Achse drehbar ist und dass die zweite Zylinderform exzentrisch zur zweiten Drehachse angeordnet ist.

Die Grundidee der Erfindung besteht darin, eine Form bereitzustellen, welche zur Erreichung einer maximalen Isolationsfestigkeit den Rohransatz mitberücksichtigt und diesen zudem in vorteilhafter Weise variabel gestalt. Die drei Grundelemente der erfindungsgemäßen Form sind daher die erste Zylinderform, die sich axial anschließende Halbkugelform und die bezüglich der Halbkugelform radial ausgerichtete zweite Zylinderform, welche letztendlich die Form des Rohransatzes bestimmt. Um nun den Rohransatz in seinem jeweiligen Winkel zur ersten Achse der Form variabel zu gestalten, ist erfindungsgemäß eine Kugelkappe vorgesehen, welche um eine zweite Achse, welche zur ersten Achse gewinkelt ist, drehbar ist. Die Kugelkappe ist Teil der Halbkugelform, das heißt, unabhängig vom Drehwinkel der Kugelkappe bleibt die eigentliche Halbkugelform unverändert.

Die zweite Zylinderform, welche dem späteren Rohransatz entspricht, ist exzentrisch zur zweiten Achse zusammen mit der Kugelkappe um die zweite Achse drehbar. Durch die Exzentrität bewirkt daher eine Drehung der Kugelkappe eine Veränderung des Ausrichtungswinkels der zweiten Zylinderform zur axialen Erstreckung der ersten Achse, also der Rotationsachse des Hauptteils. Da der Hauptteil, also erste Zylinderform und Halbkugelform, rotationssymmetrisch sind, hat eine Winkeländerung des Rohransatzes um die erste Achse keinen Einfluss auf die Form, entscheidend ist lediglich die Winkeländerung längs zur ersten Achse.

Eine Isolationsbarriere, welche einen beschriebenen metallischen Kalottenkörper umgibt, ist zumeist zweigeteilt ausgeführt, wobei zwei hohlzylindrische Barrieremodule dann von beiden axialen Seiten um den Kalottenkörper angeordnet und miteinander verbunden werden. Es sind also ein zuvor beschriebenes Formteil mit Rohransatz und ein axiales Gegenstück mit sich an einem Ende verjüngendem Durchmesser, welches keinen Rohransatz aufweist, miteinander zu verbinden, vorzugsweise ineinander zu stecken. Letztgenanntes Formteilmodul ist aufgrund des fehlenden Rohransatzstückes einfach auch ohne eine erfindungsgemäße Form zu fertigen.

Auf diese Weise ist in vorteilhafter Weise eine flexible Form für Formteile geschaffen, welche später als Isolationsbarriere einer Kalotte verwendet werden können.

In einer besonders bevorzugten Ausgestaltung der erfindungsgemäßen Form umfasst die Oberfläche der Kugelkappe den Schnittbereich der ersten Achse mit der Oberfläche der Halbkugelform. Dies ermöglicht nämlich, dass die zweite Zylinderform derart an der Kugelkappe anordenbar ist, dass diese zusammen mit der Kugelkappe so drehbar ist, dass eine Ausrichtung der zweiten Zylinderform längs der ersten Achse ermöglicht ist. Somit ist auch ein Winkel von 0° zwischen der Ausrichtung des zweiten Zylinders bzw. Rohransatzstückes und der ersten Achse realisierbar. Durch die Rotationssymmetrie des Hauptkörpers ist ein darüber hinaus gehender Winkel nicht erforderlich.

Entsprechend einer weiteren Variante der erfindungsgemäßen Form ist zweite Zylinderform zusammen mit der Kugelkappe derart drehbar, dass eine Ausrichtung der zweiten Zylinderform in einem Winkel von 30° zur ersten Achse ermöglicht ist. Zusammen mit der zuvor genannten Variante ergibt sich damit ein Winkelbereich von 0° bis 30°, innerhalb dessen der zweite Zylinder relativ zur axialen Erstreckung der ersten Achse ausgerichtet werden kann. Dies deckt den isolationstechnisch möglichen Winkelbereich in vorteilhafter Weise ab. Die Schrägstellung der zweiten Achse zur ersten Achse beträgt für dieses konkrete Beispiel dann 15°, wobei der zweite Zylinder dann in einem Winkel von ebenfalls 15° exzentrisch zur zweiten Achse auf der Kugelkappe angeordnet ist.

Als besonders vorteilhaft erweist es sich, wenn die drehbare Kugelkappe arretierbar ist. Hierdurch ist eine ungewollte Veränderung des Ausrichtungswinkels der zweiten Zylinderform beim Aufbringen der Isolationsmaterialschicht um die Form vermieden. Zur weiteren Steigerung der Genauigkeit des Ausrichtungswinkels erweist es sich zudem als sinnvoll, wenn ein Winkelmesser zur Bestimmung des Drehwinkels vorgesehen ist, beispielsweise in Form einer am Rand der drehbaren Kugelkappe eingravierten Strichskala, welche in Relation zu einem an dem angrenzenden Bereich der Halbkugelform eingravierten Bezugspunkt zu setzen ist. Als Winkelangabe ist es sowohl denkbar, eine absolute Winkelangabe des Drehwinkels der Kugelkappe, also zwischen 0° und 360°, anzugeben, oder aber auch den daraus resultierenden Anstellwinkel der zweiten Zylinderform, beispielsweise 0° bis 30°.

In einer besonders bevorzugten Variante der Erfindung ist die zweite Zylinderform mittels einer lösbaren Verbindung mit der Kugelkappe verbunden. Hierdurch wird es bei einem Anstellwinkel der zweiten Zylinderform ungleich 0° zur ersten Achse nämlich ermöglicht, nach Erhärten des Isolationsmaterials die Form aus dem dann entstandenen Formteil zu nehmen, was durch einen angewinkelten Rohransatz sonst nicht möglich wäre. Nach Lösen der zweiten Zylinderform lässt sich der Hauptteil der Form, nämlich die erste Zylinderform und die Halbkugelform mit Kugelkappe, aus dem Formteil herausnehmen wobei daran anschließend die zweite Zylinderform aus dem Rohransatz des Formteils zu entnehmen ist. In besonders bevorzugter Weise ist die lösbare Verbindung eine Schraubverbindung, welche beispielsweise von der der Halbkugelform abgewandten Seite der zweiten Zylinderform zugänglich ist.

Es erweist sich als vorteilhaft, wenn wenigstens ein Formelement, also erste Zylinderform, Halbkugelform, Kugelkappe und/oder zweite Zylinderform, innen wenigstens einen Hohlraum aufweist. Dies reduziert das Gewicht der Form und vereinfacht deren Fertigung. Bevorzugter Weise ist die Form überwiegend aus Aluminium gefertigt. Dies erweist sich sowohl aufgrund seiner geringen Dichte als geeignet, weil die Gesamtform dadurch leichter und damit einfacher zu handhaben ist, als auch aufgrund seiner Beständigkeit bezüglich des aufgetragenen Isolationsmaterials.

Ein erfindungsgemäßes Verfahren zum Herstellen von Formteilen unter Verwendung einer erfindungsgemäßen Form ist daher gekennzeichnet durch folgende Verfahrensschritte:
a) Drehen der Kugelkappe in einen gewünschten Winkel
b) Arretieren der Kugelkappe
c) Umschichten oder Umwickeln des äußeren Formabschnittes der Form mit einem weichen und/oder flexiblen und erhärtbaren Material
d) Erhärten des Materials zum Formteil
e) Öffnen der lösbaren Verbindung zwischen Kugelkappe und zweiter Zylinderform
f) Herausnehmen der ersten Zylinderform mit der sich axial anschließenden Halbkugelform aus dem Formteil
g) Herausnehmen der zweiten Zylinderform aus dem Formteil

Die Erklärungen hierzu ergeben sich aus der vorangehenden Beschreibung, es sei jedoch noch einmal auf die besonders wesentlichen Merkmale a) und e) hingewiesen, welche letztendlich durch die Flexibilität der erfindungsgemäßen Form begründet sind.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: eine exemplarische Form zum Herstellen von Formteilen in erster Stellung,
- Fig. 2: eine exemplarische Form zum Herstellen von Formteilen in zweiter Stellung sowie
- Fig. 3: ein exemplarisches Formteil in einer Schnittansicht

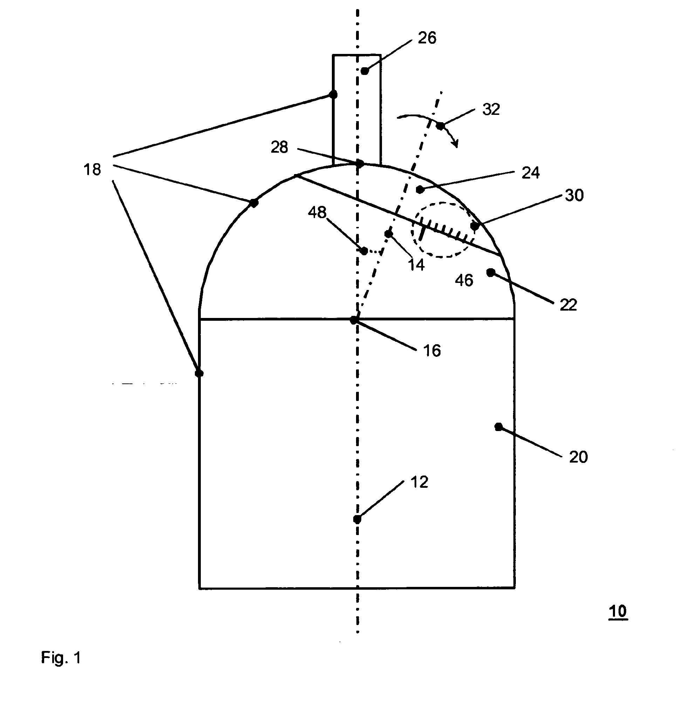

Fig. 1 zeigt eine exemplarische Form 10 zum Herstellen von Formteilen in einer ersten Stellung. Die Form 10 umfasst in ihrem Hauptteil im Wesentlichen eine erste Zylinderform 20 und eine Halbkugelform 22, welche mit ihrer Außenfläche rotationssymmetrisch um eine erste Achse 12 angeordnet sind. Die Halbkugelform 22 umfasst zudem eine Kugelkappe 24, welche um eine zweite Achse 14 in der mit dem Pfeil 32 angedeuteten Richtung drehbar ist, wobei die zweite Achse 14 zur ersten Achse 12 gewinkelt angeordnet ist, wie mit der Bezugsziffer 48 angedeutet. Der Drehwinkel der Kugelkappe 24 um die zweite Achse 14 ist mit einem Winkelmesser feststellbar, welcher mit der Bezugsnummer 30 angeordnet ist und beispielsweise im Wesentlichen Strichgravuren in der Oberfläche der Kugelkappe 24 und dem angrenzenden Rest der Halbkugelform 22 umfasst.

Mit der drehbaren Kugelkappe 24 lösbar verbunden ist eine zweite Zylinderform 26, durch welche letztendlich die Form und Ausrichtung eines Rohransatzes eines zu fertigenden Formteils bestimmt ist. Die zweite Zylinderform 26 ist in radialer Ausrichtung zum Mittelpunkt der Halbkugelform an deren Oberfläche angeordnet. Sowohl die Achse der radialen Ausrichtung der zweiten Zylinderform 26, als auch die erste 12 und zweite 14 Achse treffen sich aus geometrischen Gründen notwendigerweise unabhängig vom Drehwinkel der Kugelkappe in einem gemeinsamen Schnittpunkt 16. Die zweite Zylinderform 26 ist auf der Kugelkappe in einem Winkel exzentrisch zur zweiten Achse 14 angeordnet, der genau dem Neigungswinkel 48 der zweiten Achse 14 entspricht. Daher ist es möglich, wie in der Fig. angedeutet, die zweite Zylinderform 26 zusammen mit der Kugelkappe 24 in eine solche Winkelstellung zu drehen, dass die radiale Ausrichtung der zweiten Zylinderform 26 zusammen mit der ersten Achse 12 verläuft.

Bei der Fertigung eines entsprechenden Formteils wird ein äußerer Formabschnitt 18 der Form mit einem weichen oder flexiblen Isolationsmaterial umschichtet, beispielsweise einer feuchten Pressspanmasse. Der äußere Formabschnitt setzt sich in diesem Beispiel zusammen aus den Außenflächen der jeweiligen Formkomponenten, wobei insbesondere die Bodenfläche des ersten Formzylinders 20 nicht zu dem äußeren Formabschnitt 18 gehört. Es sei in diesem Zusammenhang angemerkt, dass die Zylinderform 20 und die Halbkugelform 22 selbstverständlich sowohl aus einem gemeinsamen Teil gebildet sein können, als auch aus mehreren Teilen zusammengefügt. Für den ersten Formzylinder bietet sich aus fertigungstechnischen Gründen beispielsweise die Verwendung eines rohrähnlichen Hohlzylinders an. Die Kugelkappe 24 muss nicht zwangsläufig ein Kugelabschnitt im mathematischen Sinn sein, vielmehr bietet es sich an, diese im nicht-sichtbaren Innenbereich um die zweite Achse 14 herum zylinder- oder kegelähnlich auszuführen, um so eine einfache drehbare Lagerung relativ zur restlichen Halbkugelform 22 zu ermöglichen, welche dann eine entsprechende zylinder- oder kegelähnliche Gegenform aufweist.

Auch die zweite Zylinderform 26 ist vorzugsweise rohrähnlich ausgeführt. Dies ermöglicht nämlich - abgesehen von einer Gewichts- und Materialeinsparung, einen besseren Zugriff beispielsweise zu einer nicht gezeigten Befestigungsvorrichtung zwischen Kugelkappe 24 und zweiter Zylinderform 26, beispielsweise einer Schraube. Diese ließe sich dann bedarfsweise durch einen durch die zweite Zylinderform 26 geführten Schraubendreher oder Inbusschlüssel oder dergleichen einfach festziehen bzw. lösen.

Das Lösen der zweiten Zylinderform 26 ist dann notwendig, wenn der äußere Formabschnitt 18 mit einem Isolationsmaterial umschichtet wurde und das daraus durch Ausbacken entstandene Formteil von der Form getrennt werden soll. In dem in der Fig. 1 dargestellten Fall ist aber gerade der Ausnahmefall gezeigt, in dem dies nicht notwendig ist, weil die Ausrichtung des zweiten Formzylinders gerade mit der ersten Achse 12 verläuft, so dass ein Formteil durch eine Zugbewegung in Richtung der ersten Achse 12 von der gesamten Form getrennt werden kann.

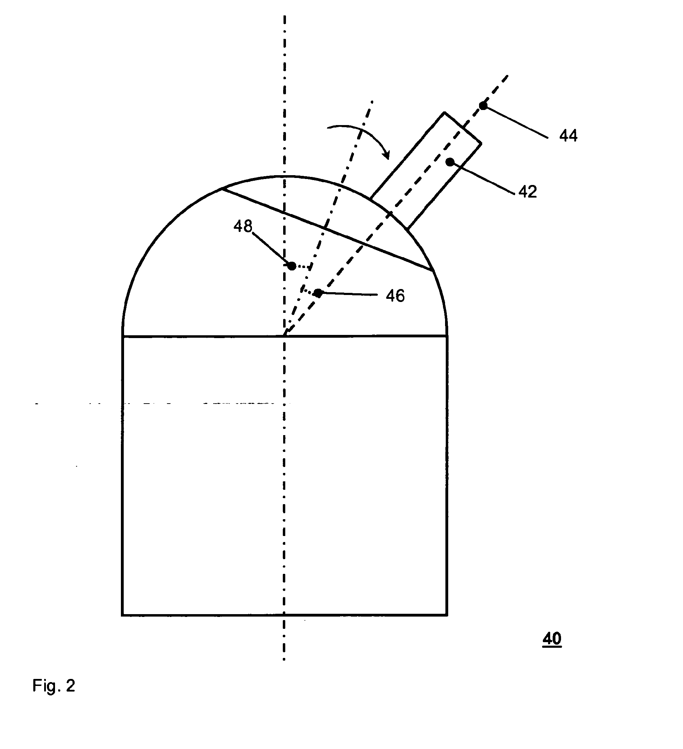

Fig. 2 zeigt dieselbe exemplarische Form zum Herstellen von Formteilen in einer zweiten Stellung 40, wobei im Übrigen dieselben Bezugszeichen wie bei Fig. 1 gelten. In dieser Fig. ist die radial zum Halbkugelformmittelpunkt 16 verlaufende Ausrichtungsachse 44 der zweiten Zylinderform in zweiter Drehstellung 42 nicht deckungsgleich mit der ersten Achse 12, sondern vielmehr an einem entgegengesetzten Extrempunkt angeordnet. Somit resultiert als Gesamtwinkel in dieser Darstellung die Summe aus Neigungswinkel 48 der zweiten Achse 14 und dem exzentrischen Winkel 46. Je nach Drehstellung der Kugelkappe 24 schwankt also die Ausrichtungsachse 44 der zweiten Zylinderform 26 zwischen 0° und dem Zweifachen des Neigungswinkels 48 der zweiten Achse 14, da in diesem Fall der Betrag des exzentrischen Winkels 46 gleich dem Neigungswinkel 48 ist.

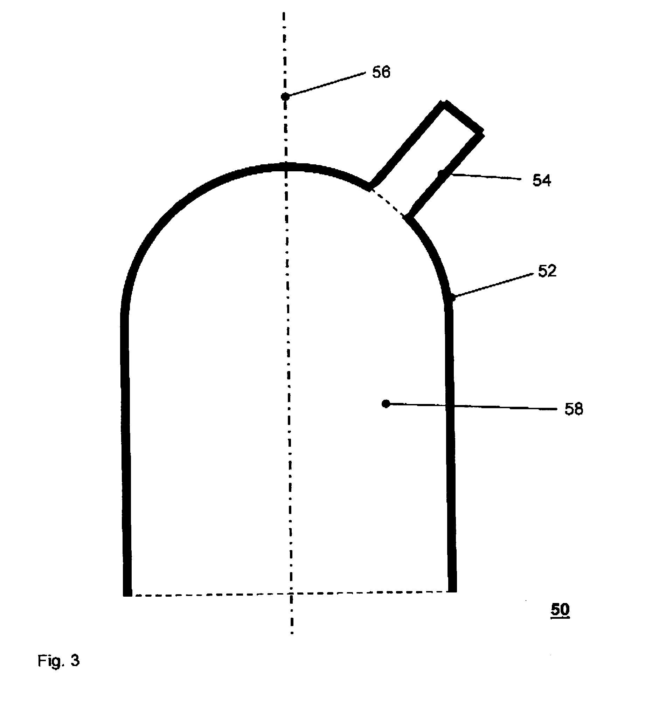

Fig. 3 zeigt ein exemplarisches Formteil in einer Schnittansicht 50, wie es durch Einsatz einer in Fig. 2 gezeigten Form in der dort gezeigten Stellung entstanden wäre. Das um einen äußeren Formabschnitt aufgetragene Isolationsmaterial ist erhärtet und die Form wurde entfernt. Somit ergibt sich ein um eine erste Achse 56 symmetrischer Grundkörper 52 eines Formteils, mit einem innern Hohlraum 58, von dem im oberen Bereich ein hohlzylindrischer Rohransatz 54 abgeht.

### Bezugszeichenliste

- 10: exemplarische Form zum Herstellen von Formteilen in erster Stellung
- 12: erste Achse
- 14: zweite Achse
- 16: Schnittpunkt von erster Achse, zweiter Achse und radialer Ausrichtung
- 18: äußerer Formabschnitt
- 20: erste Zylinderform
- 22: Halbkugelform
- 24: Kugelkappe
- 26: zweite Zylinderform in erster Drehstellung
- 28: Schnittpunkt Oberfläche Halbkugelform mit erster Achse
- 30: Winkelmesser zur Bestimmung des Drehwinkels der Kugelkappe
- 32: Drehrichtung Kugelkappe
- 40: exemplarische Form zum Herstellen von Formteilen in zweiter Stellung
- 42: zweite Zylinderform in zweiter Drehstellung
- 44: radiale Ausrichtung der zweiten Zylinderform
- 46: exzentrischer Winkel
- 48: Winkel zwischen erster und zweiter Achse
- 50: exemplarisches Formteil in einer Schnittansicht
- 52: Grundkörper des Formteils
- 54: hohlzylindrischer Rohransatz
- 56: erste Achse
- 58: innerer Hohlraum

## Patentansprüche

1. Form (10, 40) zum Herstellen von hohlzylinderähnlichen Formteilen (50), mit einem äußeren Formabschnitt (18), durch welchen ein innerer Hohlraum (58) eines um diesen (18) herum zu fertigenden Formteils (50) bestimmt ist, wobei der äußere Formabschnitt (18) eine rotationssymmetrisch um eine erste Achse (12) verlaufende erste Zylinderform (20) und eine sich direkt axial an eines der beiden Zylinderformenden anschließende Halbkugelform (22) gleichen Durchmessers aufweist, wobei eine zweite Zylinderform (26, 42) vorgesehen ist, welche sich in radialer Ausrichtung (44) an die Halbkugelform (22) anschließt, **dadurch gekennzeichnet,**
**dass** die Halbkugelform (22) eine Kugelkappe (24) aufweist, dass die zweite Zylinderform (26, 42) zusammen mit der Kugelkappe (24) um eine zweite (14) zur ersten (12) gewinkelt (46) angeordnete Achse drehbar (32) ist und dass die zweite Zylinderform (26, 42) exzentrisch (46) zur zweiten Drehachse (14) angeordnet ist.

2. Form nach Anspruch 1, **dadurch gekennzeichnet, dass** die Oberfläche der Kugelkappe (24) den Schnittbereich (28) der ersten Achse (12) mit der Oberfläche der Halbkugelform (22) umfasst.

3. Form nach Anspruch 2, **dadurch gekennzeichnet, dass** die zweite Zylinderform (26, 42) zusammen mit der Kugelkappe (22) derart drehbar (32) ist, dass eine Ausrichtung (44) der zweiten Zylinderform (26, 42) längs der ersten Achse (12) ermöglicht ist.

4. Form nach einem der Ansprüche 2 oder 3, **dadurch gekennzeichnet, dass** die zweite Zylinderform (26, 42) zusammen mit der Kugelkappe (24) derart drehbar ist, dass eine Ausrichtung (44) der zweiten Zylinderform (26, 42) in einem Winkel von 30° zur ersten Achse (12) ermöglicht ist.

5. Form nach einem der vorangegangenen Ansprüche, **dadurch gekennzeichnet, dass** die drehbare Kugelkappe (24) arretierbar ist.

6. Form nach einem der vorangegangenen Ansprüche, **dadurch gekennzeichnet, dass** ein Winkelmesser (30) zur Bestimmung eines Drehwinkels der Kugelkappe (24) vorgesehen ist.

7. Form nach einem der vorangegangenen Ansprüche, **dadurch gekennzeichnet, dass** die zweite Zylinderform (26, 42) mittels einer lösbaren Verbindung mit der Kugelkappe (24) verbunden ist.

8. Form nach Anspruch 7, **dadurch gekennzeichnet, dass** die lösbare Verbindung eine Schraubverbindung ist.

9. Form nach einem der vorangegangenen Ansprüche, **dadurch gekennzeichnet, dass** wenigstens ein Formelement (20, 22, 24, 26, 42) innen wenigstens einen Hohlraum aufweist.

10. Form nach einem der vorangegangenen Ansprüche, **dadurch gekennzeichnet, dass** diese überwiegend aus Aluminium gefertigt ist.

11. Verfahren zum Herstellen von Formteilen (50) unter Verwendung einer Form nach (10, 40) einem der Ansprüche 7 - 10, **gekennzeichnet durch** folgende Verfahrensschritte:
• Drehen (32) der Kugelkappe (24) in einen gewünschten Winkel
• Arretieren der Kugelkappe (24)
• Umschichten oder Umwickeln des äußeren Formabschnittes (18) der Form (10, 40) mit einem weichen und/oder flexiblen und erhärtbaren Material
• Erhärten des Materials zum Formteil (50)
• Öffnen der lösbaren Verbindung zwischen Kugelkappe (24) und zweiter Zylinderform (26, 42)
• Herausnehmen der ersten Zylinderform (20) mit der sich axial anschließenden Halbkugelform (22) aus dem Formteil (50)
• Herausnehmen der zweiten Zylinderform (26, 42) aus dem Formteil (50)

## Claims

1. Mould (10, 40) for producing hollow-cylinder-like moulded parts (50), having an external mould portion (18), by way of which an inner cavity (58) of a moulded part (50) to be manufactured around said portion (18) is determined, wherein the external mould portion (18) has a first cylindrical mould (20), which extends in a rotationally symmetrical manner about a first axis (12), and a hemispherical mould (22) of the same diameter which directly axially adjoins one of the two ends of the cylindrical mould, wherein a second cylindrical mould (26, 42) is provided and adjoins the hemispherical mould (22) in radial alignment (44), **characterized**
**in that** the hemispherical mould (22) has a spherical cap (24), in that the second cylindrical mould (26, 42) is rotatable (32) together with the spherical cap (24) about a second axis (14) which is arranged at an angle (46) with respect to the first axis (12), and in that the second cylindrical mould (26, 42) is arranged eccentrically (46) with respect to the second rotational axis (14).

2. Mould according to Claim 1, **characterized in that** the surface of the spherical cap (24) comprises the region of intersection (28) between the first axis (12) and the surface of the hemispherical mould (22).

3. Mould according to Claim 2, **characterized in that** the second cylindrical mould (26, 42) is rotatable (32) together with the spherical cap (22) in such a manner that alignment (44) of the second cylindrical mould (26, 42) along the first axis (12) is made possible.

4. Mould according to either of Claims 2 and 3, **characterized in that** the second cylindrical mould (26, 42) is rotatable together with the spherical cap (24) in such a manner that alignment (44) of the second cylindrical mould (26, 42) at an angle of 30° with respect to the first axis (12) is made possible.

5. Mould according to one of the preceding claims, **characterized in that** the rotatable spherical cap (24) is lockable.

6. Mould according to one of the preceding claims, **characterized in that** a protractor (30) for determining an angle of rotation of the spherical cap (24) is provided.

7. Mould according to one of the preceding claims, **characterized in that** the second cylindrical mould (26, 42) is connected to the spherical cap (24) by means of a detachable connection.

8. Mould according to Claim 7, **characterized in that** the detachable connection is a screwed connection.

9. Mould according to one of the preceding claims, **characterized in that** at least one mould element (20, 22, 24, 26, 42) has at least one cavity internally.

10. Mould according to one of the preceding claims, **characterized in that** said mould is manufactured predominantly from aluminium.

11. Process for producing moulded parts (50) using a mould (10, 40) according to one of Claims 7-10, **characterized by** the following process steps:
• the spherical cap (24) is rotated (32) to a desired angle,
• the spherical cap (24) is locked,
• a soft and/or flexible material capable of hardening is layered or wound around the external mould portion (18) of the mould (10, 40),
• the material is hardened to form the moulded part (50),
• the detachable connection between the spherical cap (24) and the second cylindrical mould (26, 42) is opened,
• the first cylindrical mould (20) with the axially adjoining hemispherical mould (22) is removed from the moulded part (50),
• the second cylindrical mould (26, 42) is removed from the moulded part (50).

## Revendications

1. Forme (10, 40) pour fabriquer des éléments de formage (50) similaires à des cylindres creux, avec une section de forme extérieure (18) à travers laquelle est défini un espace creux intérieur (58) d'un élément de formage (50) à fabriquer autour d'elle (18), la section de forme extérieure (18) comprenant une première forme cylindrique (20) s'étendant symétriquement en rotation autour d'un premier axe (12) et une forme hémisphérique (22) de même diamètre directement connexe dans le plan axial à une des deux formes cylindriques, une deuxième forme cylindrique (26, 42) étant prévue, celle-ci étant connexe à la forme hémisphérique (22) selon une orientation radiale (44), **caractérisée en ce que** la forme hémisphérique (22) comporte un bouchon sphérique (24), que la deuxième forme cylindrique (26, 42) peut pivoter (32) conjointement avec le bouchon sphérique (24) autour d'un deuxième (14) axe disposé de façon coudée (46) par rapport au premier axe (12) et que la deuxième forme cylindrique (26, 42) est disposée de façon excentrée (46) par rapport au deuxième axe de rotation (14).

2. Forme selon la revendication 1, **caractérisée en ce que** la surface du bouchon sphérique (24) comprend la zone d'intersection (28) du premier axe (12) avec la surface de la forme hémisphérique (22).

3. Forme selon la revendication 2, **caractérisée en ce que** la deuxième forme cylindrique (26, 42) peut tourner (32) conjointement avec le bouchon sphérique (22) de façon à permettre un alignement (44) de la deuxième forme cylindrique (26, 42) le long du premier axe (12).

4. Forme selon l'une quelconque des revendications 2 ou 3, **caractérisée en ce que** la deuxième forme cylindrique (26, 42) peut tourner conjointement avec le bouchon sphérique (24) de façon à permettre un alignement (44) de la deuxième forme cylindrique (26, 42) selon un angle de 30° par rapport au premier axe (12).

5. Forme selon l'une quelconque des revendications précédentes, **caractérisée en ce que** le bouchon sphérique (24) pivotant peut être bloqué.

6. Forme selon l'une quelconque des revendications précédentes, **caractérisée en ce qu'**un dispositif de mesure d'angle (30) est prévu pour déterminer un angle de rotation du bouchon sphérique (24).

7. Forme selon l'une quelconque des revendications précédentes, **caractérisée en ce que** la deuxième forme cylindrique (26, 42) est reliée au bouchon sphérique (24) par le biais d'une liaison amovible.

8. Forme selon la revendication 7, **caractérisée en ce que** la liaison amovible est une liaison vissée.

9. Forme selon l'une quelconque des revendications précédentes, **caractérisée en ce qu'**au moins un élément de forme (20, 22, 24, 26, 42) présente au moins un espace creux à l'intérieur.

10. Forme selon l'une quelconque des revendications précédentes, **caractérisée en ce qu'**elle est fabriquée majoritairement en aluminium.

11. Procédé de fabrication d'éléments de formage (50) en utilisant une forme (10, 40) selon l'une quelconque des revendications 7 à 10, **caractérisé par** les étapes suivantes :
- rotation (32) du bouchon sphérique (24) selon un angle souhaité ;
- blocage du bouchon sphérique (24) ;
- empilement ou enroulement de la section de forme extérieure (18) de la forme (10, 40) avec un matériau mou et/ou flexible et durcissable ;
- durcissement du matériau jusqu'à formation de l'élément de formage (50) ;
- ouverture de la liaison amovible réalisée entre le bouchon sphérique (24) et la deuxième forme cylindrique (26, 42) ;
- retrait de la première forme cylindrique (20) avec la forme hémisphérique (22) connexe dans le plan axial hors de l'élément de formage (50) ;
- retrait de la deuxième forme cylindrique (26, 42) hors de l'élément de formage (50).
